# EUROPÄISCHE PATENTSCHRIFT

(11) **EP 1 199 337 B1**
(45) Veröffentlichungstag und Bekanntmachung des Hinweises auf die Patenterteilung: **19.01.2011**
(21) Anmeldenummer: 00122956.6
(22) Anmeldetag: 21.10.2000
(51) Int. Cl.: C09C 1/30, C09D 7/12, C09D 11/10, C08K 9/06

(54) **Strahlenhärtende Lacksysteme**
Radiation curable lacquer systems
Vernis durcissables par rayonnement

(43) Veröffentlichungstag der Anmeldung: 24.04.2002
(73) Patentinhaber: Evonik Degussa GmbH, 45128 Essen (DE)
(72) Erfinder: Frahn, Stephanie, Dr., 63808 Haibach (DE); Ettlinger, Manfred, Dr., 63751 Karlstein (DE); Meyer, Jürgen, Dr., 63811 Stockstadt (DE)

(56) Entgegenhaltungen:
- EP-A- 0 808 880
- WO-A-81/02579
- DE-A- 3 615 790
- DE-A- 4 417 141
- US-A- 5 614 321
- L.N. LEWIS, D. KATSAMBERIS: "uv-CURABLE, ABRASION-RESISTANT AND WEATHERABLE COATINGS WITH IMPROVED ADHESION" J. APPL. POLYM. SCI., Bd. 42, Nr. 6, 1991, Seiten 1551-1556, XP002165547

## Beschreibung

Die Erfindung betrifft strahlenhärtende Lacksysteme, ein Verfahren zu ihrer Herstellung sowie ihre Verwendung.

Strahlenhärtende Lacksysteme werden verwendet um Oberflächen von Holz, Metallen und Kunststoffen zu beschichten.

Es ist bekannt, einem Bindemittel ein mit Methacryloxypropyltrimethoxysilan behandeltes kolloidales Siliciumdioxid zuzugeben (Larry N. Lewis et al., Journal of Applied Polymer Science, Vol. 42, 1551-1556 (1991).

Es ist bekannt, pyrogen hergestellte Kieselsäure mit γ-Glycidoxypropyltrimethoxysilan zu behandeln und in Epicoat einzusetzen (DE 36 15 790).

Es ist bekannt, Tetraethoxysilan in saurem Milieu zu hydrolysieren, dieses Hydrolysat mit 3-Methacryloxypropyltrimethoxysilan zu vermischen und diese Mischung als Beschichtungsmittel einzusetzen (WO 81/02579).

Die bekannten strahlenhärtenden Lacksysteme haben in manchen Formulierungen den Nachteil, dass die Oberflächenhärte ungenügend ist.

Es besteht somit die Aufgabe, strahlenhärtende Lacksysteme zu entwickeln, die diese Nachteile nicht aufweisen.

Gegenstand der Erfindung sind strahlenhärtende Lacksysteme, welche dadurch gekennzeichnet sind, dass sie mindestens eine silanisierte Kieselsäure enthalten, wobei als Silanisierungsmittel ein Silan aus der Gruppe Hexamethyldisilazan, 3-Methacryloxypropyltrialkoxysilan und/oder Glycidyloxypropyltrialkoxysilan verwendet wird, und die silanisierte Kieselsäure strukturmodifiziert ist.

Als silanisierte Kieselsäure kann eine Kieselsäure verwendet werden, wie sie in Dokument EP 0 808 880 A2 beschrieben wird.
Die Kieselsäure gemäß EP 0 808 880 A2 ist eine silanisierte Kieselsäure mit den folgenden physikalisch-chemischen Eigenschaften:

| | | |
|---|---|---|
| Spezifische Oberfläche | m²/g | 80 - 400 |
| Primärteilchengröße | nm | 7 - 40 |
| Stampfdichte | g/l | 50 - 300 |
| pH | | 3 - 10 |
| Kohlenstoffgehalt | % | 0,1 - 15 |
| DBP-Zahl | % | <200 |

Diese silanisierte Kieselsäure wird hergestellt, indem man eine Kieselsäure in einem geeigneten Mischgefäß unter intensivem Mischen, gegebenenfalls zunächst mit Wasser oder verdünnter Säure und anschließend mit einem Oberflächenmodifizierungsreagenz oder einem Gemisch aus mehreren Oberflächenmodifizierungsreagentien besprüht, 15 bis 30 Minuten nachmischt, bei einer Temperatur von 100 bis 400 °C über einen Zeitraum von 1 bis 6 h tempert, anschließend die silanisierte Kieselsäure durch mechanische Einwirkung destrukturiert/verdichtet und in einer Mühle nachvermahlt.

Als Kieselsäure kann bevorzugt eine pyrogen auf dem Wege der Flammenhydrolyse von SiCl₄ hergestellte Kieselsäure eingesetzt werden. Als Oberflächenmodifizierungsreagens kann beispielsweise Hexamethyldisilazan eingesetzt werden.

Der erfindungsgemässe strahlenhärtbare Lack besteht aus einem reaktiven Bindemittel, welches radikalisch polymerisierbare Doppelbindungen, endständig oder in β-Stellung zu einer reaktiven Gruppe, die unter Einfluss von UV-Licht oder Elektronen aushärten beziehungsweise polymerisieren, enthält. Zur Erniedrigung der Viskosität können copolymerisierbare Reaktivverdünner (Monomere) verwendet werden.

Weitere Komponenten können Füllstoffe, Mattierungsmittel und/oder Pigmente sein. Nach Bedarf können Netzmittel, Verlaufs- und Entgasungsmittel sowie sonstige Additive in strahlenhärtenden Systemen zur Anwendung kommen.

Bei der UV-Technologie verwendet man Photoinitiatoren beziehungsweise Photosensibilisatoren zur Einleitung der Polymerisation. Im Falle der Elektronenstrahlhärtung bildet die energiereiche Strahlung selbst die Startradikale für die Polymerisationsreaktion.

Ein weiterer Gegenstand der Erfindung ist ein Verfahren zur Herstellung der erfindungsgemässen strahlenhärtenden Lacksysteme, welches dadurch gekennzeichnet ist, dass 1 bis 20 %, bevorzugt 2 bis 10 %, silanisierter, pyrogener Kieselsäure abhängig von der Rheologie des Systems in das Lacksystem eingerührt werden.

Die erfindungsgemässen Lacksysteme können zur Beschichtung von Holzwerkstoffplatten, Vollholz, Holzfurnieren, Parkett, Dekorpapieren, Dekorfolien, thermoplastischen und duroplastischen Kunststoffen, mineralischen und polymeren Gläsern, Metallen (zum Beispiel Aluminium, Edelstahl, phosphatierte, chromatierte und verzinkte Stahlbleche, Kupfer), lackierten Oberflächen, Druckfarben und Leder verwendet werden.

Die erfindungsgemässen strahlenhärtenden Lacksysteme weisen die folgenden Vorteile auf:
Verbesserung der Oberflächenhärte, insbesondere der Kratzfestigkeit, ohne Beeinträchtigung der Applikationseigenschaften, sowie der optischen Eigenschaften der vernetzten Lackfilme.

Erfindungsgemäß können als Kieselsäure zur Silanisierung die pyrogen hergestellten Kieselsäuren gemäss Tabelle 1 eingesetzt werden.

| Physikalisch Chemische Daten von AEROSIL | | | | | | | | | |
|---|---|---|---|---|---|---|---|---|---|
| **Prüfmethode** | | **AEROSIL 90** | **AEROSIL 130** | **AEROSIL 150** | **AEROSIL 200** | **AEROSIL 300** | **AEROSIL 380** | **AEROSIL OX 50** | **AEROSIL TT 600** |
| **Verhalten gegenüber Wasser** | | | | | | | hydrophil | | |
| **Aussehen** | | | | | | lockeres weißes Pulver | | | |
| **Oberfläche nach BET¹⁾** | m²/g | 90±15 | 130±25 | 150±15 | 200±25 | 300±30 | 380±30 | 50±15 | 200±50 |
| **Mittlere Größe der Primärteilchen** | nm | 20 | 16 | 14 | 12 | 7 | 7 | 40 | 40 |
| **Stampfdichte** ca.-Wert²⁾ verdichtete Ware | g/l | 80 | 50 | 50 | 50 | 50 | 50 | 130 | 60 |
| (Zusatz "V") W-Ware | g/l | 120 | 120 | 120 | 120 | 120 | 120 | | |
| | | | | | | | | | |
| (Zusatz "VV")¹²⁾ | g/l | | | 50/75 | 50/75 | 50/75 | | | |
| | g/l | | | | 120 | 120 | | | |
| Trocknungsverlust³⁾ (2 Stunden bei 105 °C) bei Verlassen d. Lieferwerkes | % | <1,0 | <1,5 | <0,5⁹⁾ | <1,5 | <1,5 | <2,0 | <1,5 | <2,5 |
| Glühverlust^{4) 7)} (2 Stunden bei 1000°C) | % | <1 | <1 | <1 | <1 | <2 | <2,5 | <1 | <2,5 |
| pH-Wert⁵⁾ | | 3,7-4,7 | 3,7-4,7 | 3,7-4,7 | 3,7-4,7 | 3,7-4,7 | 3,7-4,7 | 3,8-4,8 | 3,6-4,5 |
| SiO₂⁸⁾ | % | >99,8 | >99,8 | >99,8 | >99,8 | >99,8 | >99,8 | >99,8 | >99,8 |
| Al₂O₃⁸⁾ | % | <0,05 | <0,05 | <0,05 | <0,05 | <0,05 | <0,05 | <0,08 | <0,05 |
| Fe₂O₃⁸⁾ | % | <0,003 | <0,003 | <0,003 | <0,003 | <0,003 | <0,003 | <0,01 | <0,003 |
| TiO₂⁸⁾ | % | <0,03 | <0,03 | <0,03 | <0,03 | <0,03 | <0,03 | <0,03 | <0,03 |
| HCI^{8) 10)} | % | <0,025 | <0,025 | <0,025 | <0,025 | <0,025 | <0,025 | <0,025 | <0,025 |
| Siebrückstand⁸⁾ (nach Mocker, 45 µm) | % | <0,05 | <0,05 | <0,05 | <0,05 | <0,05 | <0,05 | <0,2 | <0,05 |
| Gebindegröße (netto)¹¹⁾ | kg | 10 | 10 | 10 | 10 | 10 | 10 | 10 | 10 |

| | | | | | | | | | |
|---|---|---|---|---|---|---|---|---|---|
| 1) in Anlehnung an DIN 66131 | | | | | | | | | |
| 2) in Anlehnung an DIN ISO 787/XI, JIS K 5101/18 (nicht gesiebt) | | | | | | | | | |
| 3) in Anlehnung an DIN ISO 787/II, ASTM D 280. JIS K 5101/21 | | | | | | | | | |
| 4) in Anlehnung an DIN 55921, ASTM D 1208, JIS K 5101/23 | | | | | | | | | |
| 5) in Anlehnung an DIN ISO 787/IX, ASTM D 1208, JIS K 5101/24 6) in Anlehnung an DIN ISO 787/XVIII, JIS K 5101/20 | | | | | | | | | |
| 7) bezogen auf die 2 Stunden bei 105 °C getrocknete Substanz | | | | | | | | | |
| 8) bezogen auf die 2 Stunden bei 1000 °C geglühte Substanz | | | | | | | | | |
| 9) spezielle vor Feuchtigkeit schützende Verpackung | | | | | | | | | |
| 10) HCI-Gehalt ist Bestandteil des Glühverlustes | | | | | | | | | |
| 11) V-Ware wird in Säcken zu 20 kg geliefert | | | | | | | | | |
| 12) VV-Ware wird zur Zeit ausschließlich vom Werk Rheinfelden geliefert | | | | | | | | | |

### Beispiele

### Beispiel 1:

Es wird eine silanisierte Kieselsäure gemäss Beispiel 1 der EP 0 808 880 A2 hergestellt.
Aerosil 200 wird mit 4,3 Teilen Wasser und 18,5 Teilen HMDS (Hexamethyldisilazan) gemischt und 140 °C getempert. Die silanisierte Kieselsäure wird anschließend auf einer kontinuierlich arbeitenden Vertikalkugelmühle auf ca. 250 g/l verdichtet. Danach wird die Kieselsäure mittels einer Luftstrahlmühle nachvermahlen.
Die erhaltene Kieselsäure hat folgende Eigenschaften:

| **Beispiel** | **BET m²/g** | **Stampfdichte** | **pH** | **C- Gehalt** | **Trocknungsverlust %** | **Glühverlust %** | **DBP-Zahl %** |
|---|---|---|---|---|---|---|---|
| VT 1128/1 | 145 | 188 | 7,3 | 2,7 | 2,4 | 0,3 | 90 |

### Beispiel 2:

AEROSIL 200 wird mit 4 Teilen Wasser und 18 Teilen 3-Methacryloxypropyl-trimethoxysilan gemischt und bei 140 °C unter Schutzgas getempert. Die silanisierte Kieselsäure wird anschließend auf einer kontinuierlich arbeitenden Vertikalkugelmühle auf ca. 250 g/l verdichtet.

Die erhaltene Kieselsäure hat folgende Eigenschaften:

| | |
|---|---|
| BET [m²/g] | 138 |
| Stampfdichte [g/l] | 242 |
| pH-Wert | 4,6 |
| C-Gehalt | 5,7 |
| Trocknungsverlust [%] | 0,6 |
| Glühverlust [%] | 8,9 |
| DBP-Zahl [%] | 122 |

Versuche mit Kieselsäure gemäss Beispiel 2 in UV-härtenden Bindemitteln:

### Versuch 1:

In einem ethoxylierten Pentaerythritoltetraacrylat (Bindemittel 1) werden 10 % Kieselsäure gemäss Beispiel 2 mit einem Dissolver eingerührt und anschließend 5 min bei 3000 Upm (Scheibe Ø 45 mm) vordispergiert. Die Mischung wird in einer Labor-Perlmühle 20 min bei 2500 Upm und einer Pumpleistung von 40 % dispergiert. Als Perlen werden 1 mm Glasperlen verwendet. Die Dispergiergüte wird mit einem Grindometer, 25 µm, nach DIN ISO 1524 überprüft. Er muss kleiner 10 µm sein.

In den Lack werden 3 % Photoinitiator eingerührt. Die Applikation erfolgt mit Hilfe eines Spiralrakels (Auftrag 36 µm) auf schwarz lackierte Bleche. Die Härtung erfolgt mit einer UV-Anlage (Stromaufnahme der UV-Lampe (Quecksilberdampflampe) 7,5 - 10 mA, Bandgeschwindigkeit 10 m/min, Bestrahlungsstärke 1 W/cm).

### Versuch 2:

Im Epoxyacrylat A (Bindemittel 2) werden 10 % Kieselsäure gemäss Beispiel 2 mit einem Dissolver eingerührt und anschließend 5 min bei 3000 Upm (Scheibe Ø 45 mm) vordispergiert. Die Mischung wird in einer Labor-Perlmühle 15 min bei 2500 Upm und einer Pumpleistung 40 % dispergiert. Als Perlen werden 1 mm Glasperlen verwendet. Die Dispergiergüte wird mit einem Grindometer, 25 µm, nach DIN ISO 1524 überprüft. Er muss kleiner 10 µm sein.

In den Lack werden 3 % Photoinitiator eingerührt. Die Applikation erfolgt mit Hilfe eines Spiralrakels (Auftrag 36 µm) auf schwarz lackierte Bleche. Die Härtung erfolgt mit einer UV-Anlage (Stromaufnahme der UV-Lampe (Quecksilberdampflampe) 7,5 - 10 mA, Bandgeschwindigkeit 10 m/min, Bestrahlungsstärke 1 W/cm)

### Versuch 3:

Im Epoxyacrylat B (Bindemittel 3) werden 16 % Kieselsäure gemäss Beispiel 2 mit einem Dissolver eingerührt und anschliessend 5 min bei 3000 Upm (Scheibe Ø 45 mm) vordispergiert. Die Mischung wird in einer Labor-Perlmühle 15 min bei 2500 Upm und einer Pumpleistung von 40 % dispergiert. Als Perlen werden 1 mm Glasperlen verwendet. Die Dispergiergüte wird mit einem Grindometer, 25 µ, nach DIN ISO 1524 überprüft. Er muss kleiner 10 µm sein.

In den Lack werden 3 % Photoinitiator eingerührt. Die Applikation erfolgt mit Hilfe eines Spiralrakels (Auftrag 36 µm) auf schwarz lackierte Bleche. Die Härtung erfolgt mit einer UV-Anlage (Stromaufnahme der UV-Lampe (Quecksilberdampflampe) 7,5 - 10 mA, Bandgeschwindigkeit 10 m/min, Bestrahlungsstärke 1 W/cm).

**Tabelle 1**

| | | | | |
|---|---|---|---|---|
| Grindometerwerte, Brookfield-Viskositäten: | | | | |

| | **Grindo meterwert** | **Viskosität [mPa s]** | | **SV** |
|---|---|---|---|---|
| | **[µm]** | **6 Upm** | **60 Upm** | **6/60** |
| **Bindemittel 1** | - | 160 | 158 | 1,0 |
| **Bindemittel 1 +** **Kieselsäure gemäss** **Beispiel 2** | <10 | 451 | 389 | 1,1 |
| **Bindemittel 2** | - | 481 | 468 | 1,0 |
| **Bindemittel 2 +** **Kieselsäure gemäss** **Beispiel 2** | <10 | 1.000 | 950 | 1,1 |
| **Bindemittel 3** | - | 521 | 494 | 1,1 |
| **Bindemittel 3 +** **Kieselsäure gemäss** **Beispiel 2** | <10 | 902 | 842 | 1,1 |

### Kratzversuche:

Mit Hilfe einer Scheuer- und

Waschbeständigkeitsprüfmaschine (Fa. Erichsen) werden die Bleche mit einer Quarz/Wasser Aufschlämmung (100 g Wasser + 1 g Marlon A 350, 0,25 %ig + 5 g Sikron F500) mit 100 Hüben gescheuert. Der Glanz vor und 10 min nach dem Scheuern wird mit einem Reflektometer (20 ° Einstrahlwinkel) bestimmt.

**Tabelle 2**

| Reflektometerwerte vor und nach dem Kratzen: | | | |
|---|---|---|---|
| | **20 °-Reflektometerwert** | | **Restglanz** |
| | **vor** | **nach** | **[%]** |
| **Bindemittel 1** | 82,0 | 50,0 | 61,0 |
| **Bindemittel 1 +** **Kieselsäure gemäss** **Beispiel 2** | 80,5 | 65,2 | **81,0** |
| **Bindemittel 2** | 89,6 | 46,5 | 51,9 |
| **Bindemittel 2 +** **Kieselsäure gemäss** **Beispiel 2** | 87,8 | 67,4 | **76,8** |
| **Bindemittel 3** | 88,9 | 62,0 | 69,7 |
| **Bindemittel 3 +** **Kieselsäure gemäss** **Beispiel 2** | 87,3 | 71,4 | **81,8** |

### Beispiel 3:

AEROSIL 200 wird mit 4 Teilen Wasser und 18 Teilen 3-Methacryloxypropyl-trimethoxysilan (zum Beispiel DYNASILAN MEMO) gemischt und bei 140 °C unter Schutzgas getempert. Die erhaltene Kieselsäure hat folgende Eigenschaften:

| | |
|---|---|
| BET [m²/g] | 138 |
| Stampfdichte [g/l] | 52 |
| pH-Wert | 4,6 |
| C-Gehalt | 5,7 |
| Trocknungsverlust [%] | 0,8 |
| Glühverlust [%] | 9,7 |
| DBP-Zahl [%] | 228 |

### Beispiel 4:

AEROSIL 200 wird mit 3 Teilen Wasser und 16 Teilen 3-Glycidyloxypropyl-trimethoxysilan (zum Beispiel DYNASILAN GLYMO) gemischt und bei 140 °C unter Schutzgas getempert. Die erhaltene Kieselsäure hat folgende Eigenschaften:

| | |
|---|---|
| BET [m²/g] | 165 |
| Stampfdichte [g/l] | 53 |
| pH-Wert | 4,9 |
| C-Gehalt | 5,5 |
| Trocknungsverlust [%] | 1,5 |
| Glühverlust [%] | 8,7 |
| DBP-Zahl [%] | 242 |

## Patentansprüche

1. Strahlenhärtende mittels UV oder Elektronenstrahlen Lacksysteme, **dadurch gekennzeichnet, dass** sie mindestens eine silanisierte Kieselsäure enthalten, wobei als Silanisierungsmittel ein Silan aus der Gruppe Hexamethyldisilazan, 3-Metharcyloxypropyltrialkoxysilan und/oder Glycidyloxypropyltrialkoxysilan verwendet wird, und die silanisierte Kieselsäure strukturmodifiziert ist, d.h. durch mechanische Einwirkung destrukturiert/verdichtet und in einer Mühle nachvermahlen wird.

2. Verfahren zur Herstellung der strahlenhärtenden Lacksysteme gemäss Anspruch 1, **dadurch gekennzeichnet, dass** 1 - 20 % silanisierter, pyrogener Kieselsäure abhängig von der Rheologie des Systems in das Lacksystem eingerührt werden.

3. Verwendung der strahlenhärtenden Lacksysteme gemäss Anspruch 1 zur Beschichtung von Holzwerkstoffplatten, Vollholz, Holzfurnieren, Parkett, Dekorpapieren, Dekorfolien, thermoplastischen und duroplastischen Kunststoffen, mineralischen und polymeren Gläsern, Metallen (zum Beispiel Aluminium, Edelstahl, phosphatierte, chromatierte und verzinkte Stahlbleche, Kupfer), lackierten Oberflächen, Druckfarben und Leder.

## Claims

1. Radiation-curing (by means of UV or electron beams) coating systems **characterized in that** they comprise at least one silanized silica, use being made as silanizing agent of a silane from the group of hexamethyldisilazane, 3-methacryloyloxypropyltrialkoxysilane and/or glycidyloxypropyltrialkoxysilane, and the silanized silica is structurally modified, i.e. destructured/compacted by mechanical action and reground in a mill.

2. Process for producing the radiation-curing coating systems according to Claim 1, **characterized in that** 1% - 20% of silanized, fumed silica, depending on the rheology of the system, is stirred into the coating system.

3. Use of the radiation-curing coating systems according to Claim 1 for coating wood-material boards, solid wood, wood veneers, wood flooring blocks, decorative papers, decorative films, thermoplastic and thermosetting plastics, mineral and polymeric glasses, metals (for example aluminium, stainless steel, phosphatized, chromated and galvanized steel sheets, copper), painted surfaces, printing inks and leather.

## Revendications

1. Systèmes de laques durcissables par rayonnement (par UV ou faisceaux d'électrons), **caractérisés en ce qu'**ils contiennent au moins un acide silicique silané, avec utilisation comme agent de silanation d'un silane choisi dans le groupe constitué par l'hexaméthyldisilazane, un 3-méthacryloxypropyltrialcoxysilane et/ou un glycidyloxypropyltrialcoxysilane, et l'acide silicique silané étant modifié dans sa structure, à savoir étant compacté/déstructuré par action mécanique et post-broyé dans un broyeur.

2. Procédé pour la production des systèmes de laques durcissables par rayonnement selon la revendication 1, **caractérisé en ce que** 1 - 20 % d'acide silicique pyrogéné, silané, sont délayés dans le système de laque, en fonction de la rhéologie du système.

3. Utilisation des systèmes de laques durcissables par rayonnement selon la revendication 1, pour le revêtement de panneaux de matériaux à base de bois, de bois massif, de placages de bois, de parquet, de papiers décoratifs, de films décoratifs, de matières synthétiques thermoplastiques et thermodurcissables, de verres minéraux et polymères, de métaux (par exemple aluminium, acier inoxydable, tôles d'acier phosphatées, chromées et galvanisées, cuivre), de surfaces laquées, d'encres d'impression et du cuir.
